# EUROPÄISCHE PATENTSCHRIFT

(11) **EP 1 744 992 B1**
(45) Veröffentlichungstag und Bekanntmachung des Hinweises auf die Patenterteilung: **02.03.2011**
(21) Anmeldenummer: 05741075.5
(22) Anmeldetag: 04.05.2005
(51) Int. Cl.: C03B 5/193, C03B 5/235

(54) **VERFAHREN ZUM LÄUTERN VON GLAS**
GLASS REFINEMENT PROCESS
PROCEDE POUR PURIFIER DU VERRE

(30) Priorität: 10.05.2004 DE 102004022936
(43) Veröffentlichungstag der Anmeldung: 24.01.2007
(73) Patentinhaber: Linde AG, 80331 München (DE)
(72) Erfinder: MAHRENHOLTZ, Hans, 86567 Hilgertshausen (DE)
(74) Vertreter: Gellner, Bernd
(86) Internationale Anmeldenummer: PCT/EP2005/004873
(87) Internationale Veröffentlichungsnummer: WO 2005/110933

(56) Entgegenhaltungen:
- EP-A- 0 812 809
- EP-A- 0 915 062
- DD-A1- 160 186
- DE-A1- 10 026 884
- US-A- 3 237 929
- US-A- 5 922 097
- US-B1- 6 357 264
- PATENT ABSTRACTS OF JAPAN Bd. 2003, Nr. 02, 5. Februar 2003 (2003-02-05) & JP 2002 284532 A (OSAKA GAS CO LTD), 3. Oktober 2002 (2002-10-03)

## Beschreibung

Die Erfindung betrifft ein Verfahren zum Läutern von geschmolzenem Glas, wobei sauerstoffhaltiges und wasserstoffhaltiges Gas in die Schmelze einblasen werden.

Bei der Herstellung von Gläsern aus anorganischen Materialien werden in einem kontinuierliche verlaufenden Verfahren Rohstoffe, und zwar üblicherweise Quarzsand, Soda, Kalkstein, Marmor oder Kalkmergel, gemischt und eingeschmolzen. Dabei läuft der Schmelzvorgang in verschiedenen Phasen ab, in denen chemische Reaktionen und physikalische Vorgänge zum Teil nebeneinander stattfinden. Bei höheren Temperaturen finden auch Festkörperreaktionen an den Kontakten der sich berührenden Korngrenzen statt. Darüber hinaus wird CO₂ und H₂O aus den Kristallen freigesetzt. Dabei entsteht das CO₂ durch Zersetzungsreaktionen der Glasbildenden Salze. Sofern Sulfate vorhanden sind wird auch SO₂ freigesetzt.

Beim Schmelzen von Glas entstehen somit als Folge des Zerfalls der Ausgangsstoffe, des Gemenges, beachtliche Mengen an Gasen. Eine grobe Schätzung besagt, dass man aus 1,2 kg Gemenge etwa 1 kg Glas erschmilzt, d. h. dass während des Einschmelzens ca. 1/5 des Gemengengewichts in Form von Gas freigesetzt werden. Darüber hinaus werden auch andere Gase durch das Gemenge mitgeführt oder durch Verbrennungsöfen in das schmelzende Glas eingetragen.

Das meiste Gas entweicht zwar während des anfänglichen Aufschmelzens des Glases, jedoch wird ein beachtlicher Teil des Gases in der Schmelze eingefangen. Ein Teil des eingefangenen Gases wird in der Glasschmelze gelöst, der andere Teil verbleibt als örtliche Gaseinschlüsse, als sogenannte Blasen, in der Schmelze. Dabei wachsen oder schrumpfen die Blasen, wenn der Blaseninnendruck höher oder niedriger ist als der Gleichgewichtsdruck der gelösten Gase. Die Gasblasen haben dabei eine unterschiedliche Größe.

Die dabei erhaltene Schmelze wird auch als Rauschmelze bezeichnet Sie weist jedoch noch starke Schlieren und viele Blasen auf, was die Qualität eines aus der Glasschmelze hergestellten Glas- bzw. Glaskeramikköpers nachteilig beeinträchfig. Aus diesem Grund wird die noch stark schlierige und blasenhaltige Glasschmelze weiter erhitzt, mittels mechanischen Rührorganen, durch Zerhacken mit feinen Nadeln und/oder durch das Einblasen von Sauerstoff mittels feinen Düsen homogenisiert und von den Gasblasen geläutert.

Unter dem Läutern von Glas versteht man daher einen dem Aufschmelzvorgang in sogenannten Läuterungskammem nachgeschalteten Schmelzverfahrensschritt, der
- eine weitgehenden Beseitigung von Gasblasen definierter Größenklassen und
- eine gezielte Einstellung des Gasgehalts der Glasschmelze sicherstellt und dabei gleichzeitig
- in eine komplexe Abfolge von Schmelzprozessschritten zu integrieren ist.

Die Läuterung des Glases ist demnach von höchster Bedeutung für die Qualität des am Ende des Schmelzprozesses vorliegenden Produkts.

Für das Läutern haben sich bekannter Weise verschiedene Methoden herausgebildet

Die Gasblasen haben von Hause aus durch ihren statischen Auftrieb das Bestreben, in der Schmelze aufzusteigen und dann ins Freie zu entweichen. Dieser Vorgang würde ohne äußere Einflüsse jedoch eine beträchtliche Zeit brauchen, die den Produktionsprozess wegen langer Standzeiten verteuern würde. Es ist daher bekannt, in der Läuterungszone höhere Temperaturen zu erzeugen, um so die Viskosität der Schmelze und damit die Aufstiegsgeschwindigkeit der Gasblasen zu erhöhen, sowie um den Blasendurchmesser zu vergrößern. Diese zusätzliche Temperaturerhöhung erfordert allerdings eine beachtliche Energie, was ebenfalls die Produktionskosten stark erhöht

Bewährt und weitgehend optimiert ist auch das chemische Läutern von Glas. Dabei werden der Schmelze chemische Läutermittel und zwar Oxide mit temperaturabhängigen Oxidationsstufen zugesetzt.

Das chemische Läutern hat prinzipbedingte Nachteile, wie die hohe Temperatur, den hohen Zeitaufwand für das Läuterverfahren, da die Gasdiffusion in der Schmelze sehr langsam verläuft, und die Giftigkeit der eingesetzten Chemikalien.

Wegen dieser Nachteile sind auch sog. physikalische Läuterverfahren bekannt geworden, die die Chemie des Glases unbeeinträchtigt lassen. Das physikalische Läutern einer Glasschmelze beruht darauf, das Blasen mit physikalischen Methoden "gezwungen" werden, an die Oberfläche der Schmelze aufzusteigen, dort zerplatzen und ihren Gasinhalt freigeben oder dass sie sich in der Schmelze auflösen.

Aus der DE 100 09 425 A1 ist ein Verfahren zur Herstellung von Glas bekannt, bei dem geschmolzenes Glas in Wannen mit Sauerstoff geläutert wird. Diese Verfahren bildet den Oberbegriff des Anspruchs 1. Kern dieses Verfahren ist es, dass man in der Glasschmelze mindestens ein Edelmetallelement anordnet, das eine der Schmelze zugewandte glasseitige äußere Oberfläche und eine der Glasschmelze abgewandte mit Gas beaufschlagbare innere Oberfläche aufweist, und dass man die der Glasschmelze abgewandte Oberfläche mit Sauerstoff oder einen sauerstoffhaltige Gasgemisch beaufschlagt. Dieses Verfahren ist wegen der Notwendigkeit von Edelmetallelementen relativ teuer.

Aus der US-A-5,785,726 ist es bekannt, Gläser für flache Bildschirme insbesondere LCDs (Liquid Crystal Displays) und TFTs (Thin Film Transistors) herzustellen, wobei insbesondere im Abstandsbereich das Entstehen von Sauerstoffblasen, das sogenannte "O₂-Reboil", dadurch vermieden wird, dass Platinteile des Abstandsbereichs zumindest teilweise mit Wasserstoff gespült wird. Auf diese Weise wird der in der Glasschmelze vorliegende Sauerstoff durch die Wasserstoffdurchlässige Platinwanne zu Wasser reduziert, wobei Sauerstoffgasblasen aufgelöst werden.

Aus der EP 966 406 B1 ist ein Verfahren zum Schmelzen und Läutern von Glasrohstoffen bekannt, bei dem die zum Schmelzen der Glasrohrstoffe erforderliche Wärmeenergie ganz oder teilweise durch die Verbrennung von.Brennstoffen mit mindestens einem Brenngas bereitgestellt wird, wobei die bei diesem Verbrennungsvorgang entstehenden Flammen In die Glasschmelze geleitet werden. Zur Läuterung der Glasrohstoffe nach dem Schmelzvorgang wird ein Vakuumverfahren eingesetzt. Dieses ist wegen des hohen Aufwandes relativ teuer.

Die JP 2002 284532 A beschreibt ein Verfahren zur Klärung und Homogenisierung einer Glasschmelze durch Eindüsen eines Gasgemisches aus einem brennbaren Gas und Sauerstoff.

Die DE 100 26 884 A1 beschreibt ein Verfahren zur thermischen und chemischen Homogenisierung von Glasschmelzen durch "Bubblen" (Anspruch 2) mit einem Wasserstoff-/Sauerstoffgemisch. Dabei kann eine zusätzliche Läuterung erfolgen.

Die US 5 922 097 A und die auf die gleiche Basisanmeldung zurückgehende EP 0812 809 A2 beschreiben ein Verfahren zum Läutern einer Glasschmelze durch Eindüsen eines Wasserstoff-Sauerstoffgemisches. Diese Literaturstellen bilden den Oberbegriff des Anspruchs 1. Problematisch an diesem Verfahren ist, dass die Knallgasmischung bereits in der Zuleitung oder im Stein vorzeitig reagieren könnte.

Aufgabe der Erfindung ist es, ein verbessertes Verfahren zur Läuterung von Glasschmelzen bereitzustellen, welche sicherer band handhabbar ist.

Diese Aufgabe wird erfindungsgemäß gelöst von einem Verfahren mit den Merkmalen des Anspruchs 1. Ausführungen der Erfindung sind Gegenstände von Unteransprüchen.

Das gleichzeitige Eindüsen von Wasserstoff und (unverbrannten) Sauerstoff an nahe benachbarten Stellen in der Glasschmelze führt dazu, dass in der Glasschmelze viele Knallgasreaktionen stattfinden. Die Gase der eingebrachten Bläschen reagieren in der heißen Schmelze zu Wasserdampf, wodurch einerseits Energie durch die Verbrennung von Wasserstoff und Sauerstoff zum Erhitzen der Schmelze eingebracht wird und andererseits das Perlen der aufsteigenden Gasblasen eine gute Durchmischung der Glasschmelze verursacht Die Reaktion verbessert oder erhöht die Restquarzauflösung in der Glasschmelze dadurch, dass durch die Reaktionen ein breites (akustisches) Frequenz- und Amplitudenfeld ensteht, das die Grenzschicht Restquarz/Glasschmelze und den Restquarz unterschiedlich anregt, was letztlich dazu führt, dass Restquarz von frischer Schmelze umgeben ist und stärker aufgelöst wird.

Die erfindungsgemäße Reaktion führt zu einem erhöhten Wasser-Partialdruck in der Glasschmelze, welche wiederum die Läuterung, hauptsächlich des beim Erschmelzen entstanden CO₂, begünstigt oder verbessert.

Der erhöhte Wasserpartialdruck in der Glasschmelze führt weiter zu einer partiellen Lösung von Natrium aus dem Glas in Form von Natronlauge (NaOH) in den Wasserdampfblasen. Diese Natronlauge reduziert, nachdem sie die Oberfläche der Glasschmelze erreicht hat, die Stabilität von Schaum, welcher sich oftmals an der

Glasschmelzenoberfläche befindet, dadurch, dass dem an Natrium verarmten Schaum Natrium Wieder zugeführt wird.

Die Energie, die durch die Knallgasreaktionen entsteht, verbessert die Strömung und die Läuterung der Glasschmelze. Es wird erfindungsgemäß in kleinen Knallgasreaktionen Wasserdampf erzeugt, der beim Aufsteigen die an sich bekannten positiven Effekte der Dampfläuterung aufweist

Als wasserstoffhaltiges Gas kann reiner Wasserstoff, technisch reiner Wasserstoff oder ein wasserstoffenthaltendes Gasgemisch verwendet werden. Möglich ist ebenso die Verwendung von wasserstoffhaltigen Gasen wie Methan oder anderen Kohlenwasserstoffen.

Als sauerstoffhaltiges Gas kann reiner Sauerstoff, technisch reiner Sauerstoff, angereicherte. Luft; d. h. Luft, deren Sauerstoffgehalt größer 21 % oder größter 30 % ist, oder auch Luft verwendet werden.

Das Verhältnis zwischen Wasserstoff und Sauerstoff sollte stöchiometrisch sein, wobei ein etwas unterstöcheometrisches oder überstöcheometrische Verhältnis je nach Glasart gewünscht sein kann. Hierdurch kann z.B. die Farbwirkung beinflußt werden, da die Färbung von Gläsern (größtenteils) von der Oxidationsstufe der Metalle (im Glas) abhängt.

Das Einblasen der Gase geschieht ungemischt nebeneinander, wobei bevorzugt dafür gesorgt wird, dass die Gaseintragsstellen relativ nahe beisammen liegen.

Die entstehenden Knallgasexplosionen sind bei der Durchführung des Verfahrens als leichtes Knallen oder Knattern zu hören.

Weitere Merkmale und Vorteile der Erfindung ergeben sich aus der nachfolgenden Beschreiburig eines Ausführungsbeispiels anhand einer Figur.

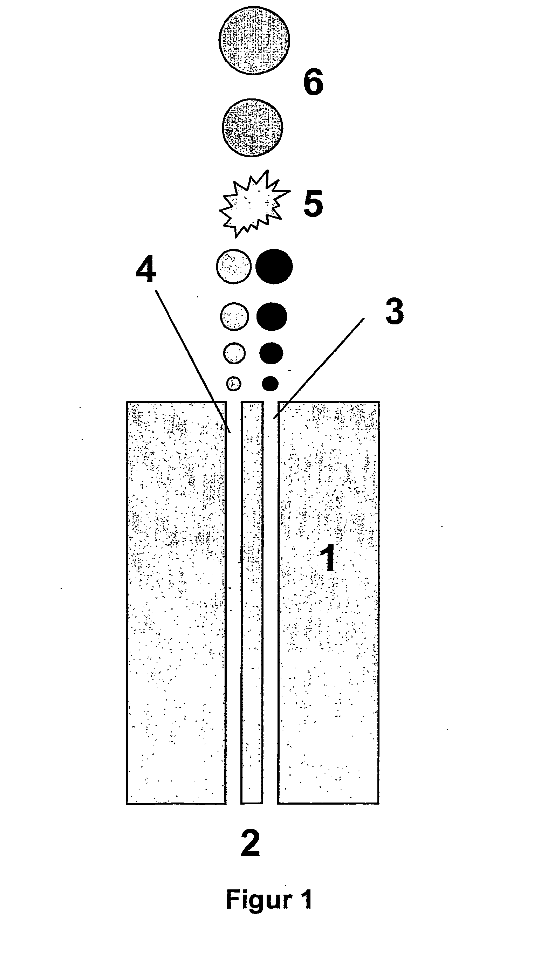

Fig. 1 zeigt einen Stein 1, der in den Boden einer nicht gezeigten, mit Glasschmelze gefüilten Glasschmelzwanne eingesetzt ist. Der Stein 1 hat zwei Bohrungen 2, über die die oben beschriebenen Gase (3 und 4) von unten in die Glasschmelze eingeführt werden. Nach einer bestimmten Zeit treffen sich die in der Schmelze aufsteigenden Gasblasen der oben beschriebenen Gase und reagieren miteinander (Reaktion 5) und es entsteht Wasserdampf (6), welcher dann weiter nach oben aufsteigt.

## Patentansprüche

1. Verfahren zum Läutern von geschmolzenem Glas, wobei sauerstoffhaltiges und wasserstoffhaltiges Gas in die Schmelze eingeblasen werden, **dadurch gekennzeichnet, dass** die Gase (3, 4) an benachbarten Stellen so nebeneinander eingedüst werden, das in der Glasschmelze Knallgasreaktionen (5) stattfinden.

2. Verfahren nach Anspruch 1,**dadurch gekennzeichnet, das** als wasserstoffhaltiges Gas (4) reiner Wasserstoff, technisch reiner Wasserstoff, Erdgas oder ein anderes wasserstoffhaltiges Brenngas eingesetzt wird.

3. Verfahren nach Anspruch 1 oder 2, **dadurch gekennzeichnet, dass** als sauerstoffhaltiges Gas (3) reiner Sauerstoff, technisch reiner Sauerstoff, angereicherte Luft oder Luft verwendet wird.

## Claims

1. Process for refining molten glass, wherein oxygen-containing gas and hydrogen-containing gas are blown into the melt, **characterized in that** the gases (3, 4) are injected alongside one another at adjacent points such that oxyhydrogen gas reactions (5) take place in the glass melt.

2. Process according to Claim 1, **characterized in that** the hydrogen-containing gas (4) used is pure hydrogen, technically pure hydrogen, natural gas or another hydrogen-containing fuel gas.

3. Process according to Claim 1 or 2, **characterized in that** the oxygen-containing gas (3) used is pure oxygen, technically pure oxygen, enriched air or air.

## Revendications

1. Procédé de purification de verre fondu, un gaz contenant de l'oxygène et un gaz contenant de l'hydrogène étant faits barboter dans la masse fondue, **caractérisé en ce que** les gaz (3, 4) sont injectés l'un à côté de l'autre à des emplacements voisins de manière à ce que des réactions de gaz oxyhydrique (5) aient lieu dans la masse fondue de verre.

2. Procédé selon la revendication 1, **caractérisé en ce que** de l'hydrogène pur, de l'hydrogène techniquement pur, du gaz naturel ou un autre gaz de combustion contenant de l'hydrogène est utilisé en tant que gaz contenant de l'hydrogène (4).

3. Procédé selon la revendication 1 ou 2, **caractérisé en ce que** de l'oxygène pur, de l'oxygène techniquement pur, de l'air enrichi ou de l'air est utilisé en tant que gaz contenant de l'oxygène (3).
